# EUROPEAN PATENT SPECIFICATION

(11) **EP 1 486 016 B1**
(45) Date of publication and mention of the grant of the patent: **12.10.2005**
(21) Application number: 03743470.1
(22) Date of filing: 07.03.2003
(51) Int. Cl.: H04J 3/06

(54) **INTERNAL SIGNALING METHOD TO SUPPORT CLOCK SYNCHRONIZATION OF NODES CONNECTED VIA A WIRELESS LOCAL AREA NETWORK**
INTERNES ZEICHENGABEVERFAHREN ZUR UNTERSTÜTZUNG DER TAKTSYNCHRONISATION VON ÜBER EIN DRAHTLOSES LOKALES NETZWERK VERBUNDENEN KNOTEN
PROCEDE DE SIGNALISATION INTERNE SERVANT A METTRE EN OEUVRE LA SYNCHRONISATION D'HORLOGE DE NOEUDS CONNECTES PAR L'INTERMEDIAIRE D'UN RESEAU LOCAL SANS FIL

(30) Priority: 07.03.2002 US 362518 P; 03.04.2002 US 369550 P; 07.11.2002 US 289758; 13.12.2002 US 319871
(43) Date of publication of application: 15.12.2004
(73) Proprietor: Koninklijke Philips Electronics N.V., 5621 BA Eindhoven (NL)
(72) Inventor: DEL PRADO PAVON, Javier, NL-5656 AA Eindhoven (NL); CHOI, Sunghyun, NL-5656 AA Eindhoven (NL)
(74) Representative: Groenendaal, Antonius W. M.
(86) International application number: PCT/IB2003/000838
(87) International publication number: WO 2003/075488

(56) References cited:
- WO-A-01/59965
- "Wireless LAN Medium Access Control (MAC) and Physical Layer (PHY) Specifications" LAN MAN STANDARDS COMMITTEE OF THE IEEE COMPUTER SOCIETY, [Online] 1999, pages 1-512, XP002250755 Retrieved from the Internet: <URL:http://standards.ieee.org/getieee802/ download/802.11-1999.pdf> [retrieved on 2003-08-07]

## Description

### BACKGROUND OF THE INVENTION

### 1. Field of the Invention

The present invention generally relates to clock synchronization and, more particularly, to an internal signaling method to support stringent clock synchronization at a higher-layer protocol.

### 2. Description of the Related Art

High-precision clock synchronization is one of the most basic requirements in distributed real-time systems. Due to the unavoidable drift of local clocks, a global time base can be achieved only by means of a clock-synchronization protocol. Co-pending U.S. application 60/362,518, filed on March 7, 2002, is directed to a clock-synchronization protocol for wirelessly synchronizing clock registers of wired or wireless nodes via a wireless local area network (i.e., 802.11 network). To support the clock-synchronization protocol disclosed therein, there is a need for a set of management primitives (i.e., internal signaling) which will provide information about the synchronization frames from the medium access control (MAC) to a higher-layer protocol.

### SUMMARY OF THE INVENTION

The present invention provides a set of internal signaling (i.e., management primitives) to support a clock-synchronization protocol for wirelessly synchronizing clock registers of wired or wireless nodes via a wireless local area network (i.e., 802.11 network). The clock synchronization is performed between two higher-layer protocol entities residing within two different wireless stations (STAs).

### BRIEF DESCRIPTION OF THE DRAWINGS

The foregoing features of the present invention will become more readily apparent and may be understood by referring to the following detailed description of an illustrative embodiment of the present invention, taken in conjunction with the accompanying drawings, where:
FIG. 1 illustrates the architecture of a wireless communication system whereto embodiments of the present invention are to be applied;
FIG. 2a illustrates the master node and a representative non-master node from the communication system of FIG. 1;
FIG. 2b illustrates two successively transmitted synchronization frames which are transmitted at near-periodic intervals from the master node to all of the non-master nodes;
FIG. 3 is an illustration of an 802.11 management architecture for describing the master node of FIG. 2a;
FIG. 4 is a flow chart illustrating the operation steps for supporting clock synchronization according to an embodiment of the present invention; and,
FIG. 5 is a process flow diagram further illustrating the operational steps of the flowchart of FIG. 4.

### DETAILED DESCRIPTION OF THE PRESENT INVENTION

In the following description, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments, which depart from these specific details. In some instances, well-known structures and devices are shown in block-diagram form, rather than in detail, in order to avoid obscuring the present invention.

The present invention is described below in the context of synchronizing 1394 wireless nodes via an 802.11 wireless LAN. However, it is to be appreciated that the teachings of the invention discussed herein are not so limited. That is, the invention is applicable to any communication system, wired or wireless, that requires stringent synchronization as defined herein. For example, the present invention has applicability to wired communication systems, such as IEEE 802.3 and Ethernet.

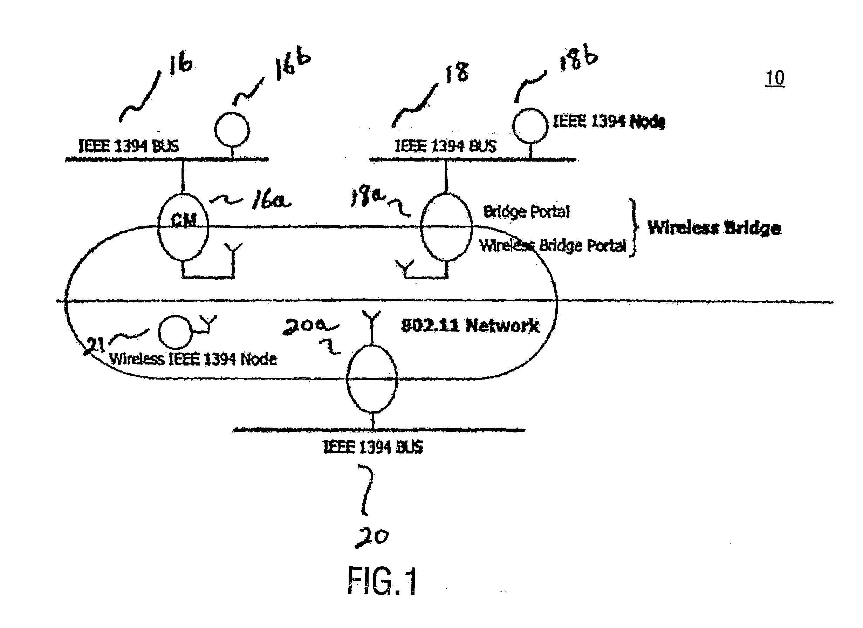

With reference now to the figures, and in particular with reference to FIG. 1, an IEEE 802.11 wireless network 10, in which a preferred embodiment of the present invention may be implemented, is depicted. As shown, the network 10 includes 1394 buses 16, 18, and 20, which in the exemplary embodiment have associated there-with wireless bridges (nodes) 16a, 18a, and 20a. Wireless bridges 16a, 18a, and 20a serve as entrance points through which wireless communications may occur over the network 10 between the 1394 buses 16, 18, and 20. The network 10 also includes a 1394 stand-alone wireless node 21, which can represent any stand-alone device such as a digital video camera or a palm device, which is able to use the 1394 protocol to communicate with other devices. The network 10 further includes wired 1394 nodes 16b and 18b.

The exemplary embodiment of FIG. 1 is shown only to describe the present invention more clearly and those skilled in the art will recognize that numerous variations are possible, both in form and function. For instance, the network 10 might include a greater or lesser number of 1394 buses and/or any other kind of nodes requiring synchronization. Network 10 may also include a greater or lesser number of stand-alone nodes or non-stand alone nodes requiring synchronization. It should be appreciated that the network 10 may use the 802.11 WLAN technology, as shown in the exemplary embodiment of FIG. 1, or any other kind of wireless/wired communication system to connect wireless/wired nodes/buses. All such variations are believed to be within the scope of the present invention. The network 10 and the exemplary figures below are provided solely as examples for the purposes of explanation and are not intended to imply architectural limitations.

To perform clock synchronization in the network 10, time-stamp values are generated from a node arbitrarily designated as a master node (or "root node") in the network 10. In the network 10, the node 16a is arbitrarily selected as the master-clock master node to which every other non-master node (slave node) in the network is synchronized. The master node 16a in the network 10 has the role of clock distribution within the network.

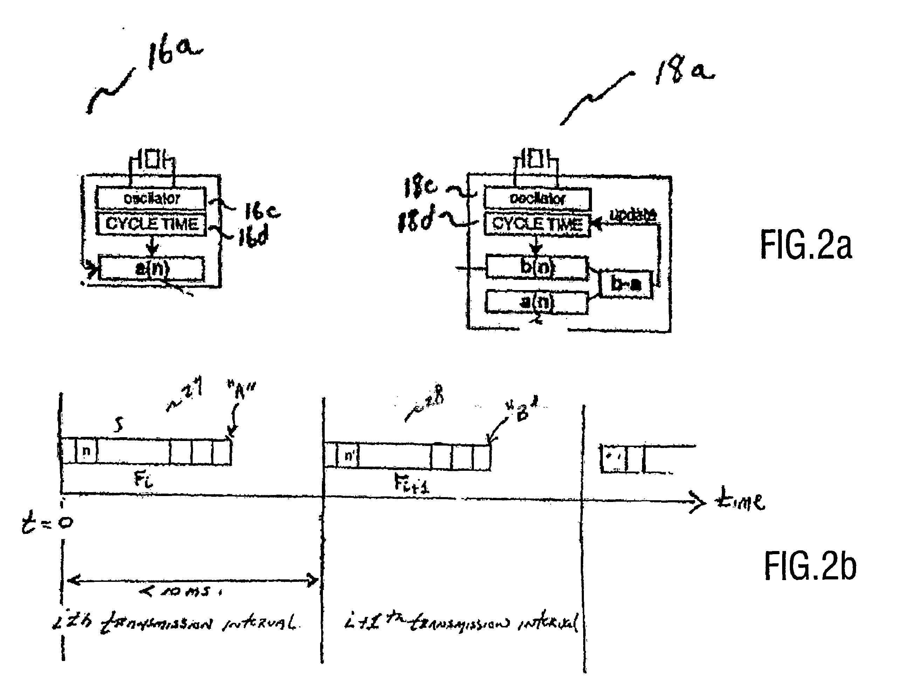

With reference now to FIG. 2a, for easy explanation, the process of clock synchronization is described using only the master node 16a and a single non-master node 18a are shown. It is noted that the operations performed in the single illustrated non-master node 18a occur in an identical fashion in all other non-master nodes of the network 10. FIG 2a illustrates the constitution of the master node 16a and non-master node 18a according to an embodiment of the invention. The master node 16a and non-master node 18a are shown to include the internal 24.576 MHz clocks (oscillators) 16c and 18c and associated cycle-time registers 16d and 18d. The 24.576 clocks 16c and 18c run freely and update the contents of the associated cycle-time registers 16d and 18d. The cycle-time registers 16d and 18d provide fields that specify the current time value, and awrite to the cycle time register initializes the clock hardware to the value contained in the write transaction. The elements that constitute the master node 16a and non-master node 18a are conventional and will not be described further.

FIG. 2b illustrates two successively-transmitted synchronization frames, Fᵢ 27 and, Fᵢ₊₁ 28 to perform clock synchronization. The synchronization frames 27 and 28 may be transmitted at near-periodic intervals from the master node 16a to all of the non-master nodes -- i.e., non-master node 18a -- in the network 10. Each synchronization frame is identified by both its source address (i.e., the MAC address of the master node transmitting the frame) and a destination address. The destination address is a special multicast address reserved explicitly for performing clock synchronization. Each synchronization frame includes clock-synchronization information to synchronize cycle-time registers 16d and 18d at near-periodic intervals. Synchronization frames 27 and 28 are generated from the master node 16a so as to synchronize the higher-layer protocol entities which reside within the master node 16a and the non-master nodes 18. The present invention is directed to a method for supporting these higher-layer protocols.

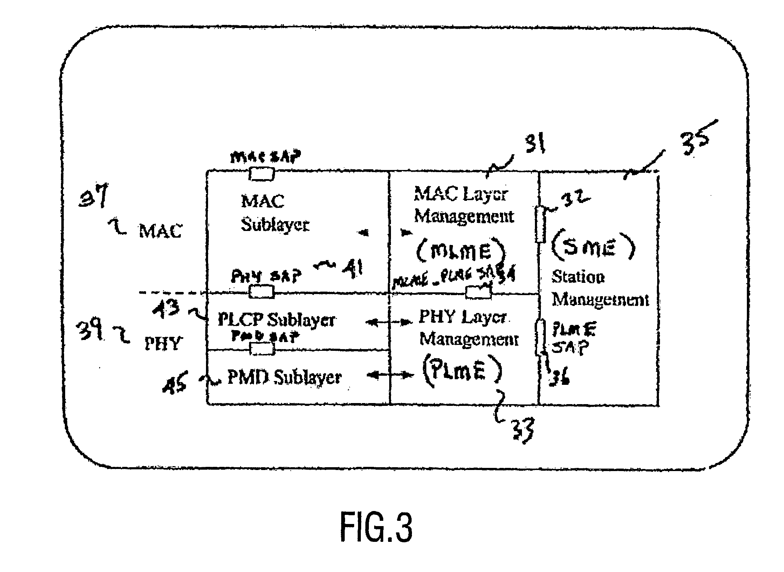

To illustrate the management primitives between the Station Management Entity (SME) and the MAC of the master node 16a and the non-master node 18, an 802.11 general-management architecture is described below and illustrated in FIG. 3. The management primitives are described herein for a 1394 clock-synchronization application; however, it is noted that the management primitives of the invention have broader application to any higher-layer protocol that requires stringent synchronization.

FIG. 3 illustrates an 802.11 management architecture for describing nodes 16a and 18a. The architecture is comprised of three components; a MAC-layer management entity (MLME) 31, a physical-layer management entity (PLME) 33, and a system management entity (SME) 35. There are three defined interfaces among the management components 32, 34, and 36. The SME 35 may alter both the MAC and the PHY Management Information Bases (MIBs). Both the MAC 37 and PHY 39 layers have access to the MIBs. The MIBs can be queried to gain status information, as well as objects that can cause certain actions to take place. The MLME layer 31 communicates with the PLME 33 via specific primitives through an MLME_PLME service access point (SAP) 34. When the MLME layer 31 instructs, the PLME sublayer 33 instructs the PLCP sublayer 43 to prepare MPDUs for transmission. The PLCP sublayer 43 also delivers incoming frames from the wireless medium to the MAC layer 37. The PLCP sublayer 43 minimizes the dependence of the MAC layer 37 on the PMD sublayer 45 by mapping MPDUs into a frame format suitable for transmission by the PMD sublayer 45. Under the direction of the PLCP sublayer 43, the PMD sublayer 45 provides actual transmission and reception of PHY entities between two stations through the wireless medium. To provide this service, the PMD sublayer 45 interfaces directly with the air medium and provides modulation and demodulation of the frame transmissions.

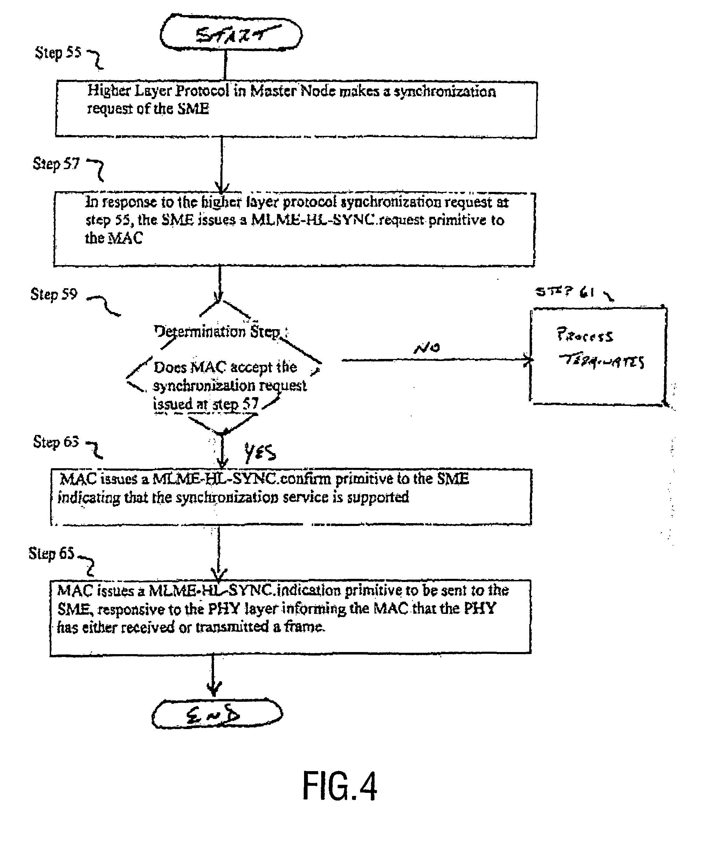

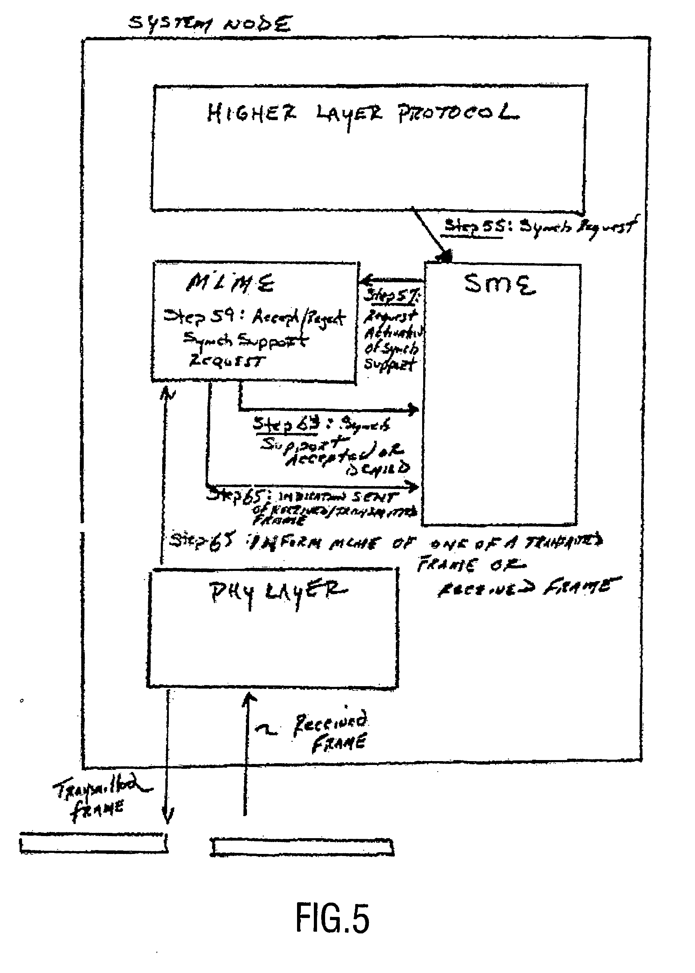

With reference now to the flowchart of FIG. 4 and the process flow diagram of FIG. 5, described below are illustrative steps involved in supporting clock synchronization of a higher-layer protocol, such as the wireless nodes of FIG. 1 in accordance with an exemplary embodiment of the present invention.

The process starts at step 55 where a higher-layer protocol in the master node 16a makes a synchronization request of the SME. Synchronization request from the higher-layer protocol is required to initiate the higher-layer synchronization protocol. The SME then issues a synchronization request to the MLME 31 in the form of a MLME-HL-SYNC.request primitive which specifically requests activation of the synchronization-support mechanism in the MLME 31. The first management primitive is described as follows:

### A. The general form of the MLME-HL-SYNC.request primitive

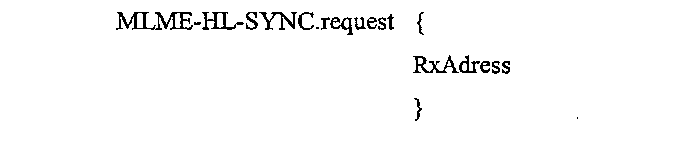

### B. Parameter Description

**Table 1.**

| **Parameter Name** | **Parameter Type** | **Valid Parameter Range** | **Parameter Description** |
|---|---|---|---|
| RxAdress | MACAddress | A multicast MAC address | Specifies the multicast address that the synchronization frames are addressed to: |

It should be noted that the MAC layer 37 has no way of knowing on its own which frames are synchronization frames. It therefore must have some way of recognizing synchronization frames when they are issued by the higher-layer protocol. The "RxAddress" parameter is the means by which the MAC layer 37 recognizes a frame as a synchronization frame. Specifically, the "RxAddress" informs the MAC layer 37 that when the MAC layer 37 receives a frame from the higher layers or from the PHY layer, having a destination address equal to "RxAddress," which is a multicast address, that frame should be identified by the MAC layer 37 as a synchronization frame.

At step 59, it is determined whether or not the MAC layer 37 accepts the synchronization-service request from the SME 35. If the service request is not accepted by the MAC layer 37, then the process terminates at step 61. Otherwise if the MAC layer 37 accepts the synchronization-service request of the SME 35 then the process continues at step 63.

At step 61, the process terminates because the MAC layer 37 does not accept the synchronization-service request from the SME. In this case the MLME 31 issues an MLME-HL-SYNC.confirm primitive to the SME 35 indicating that the synchronization service is not supported in the MAC layer 37 with the parameter setting: "ResultCode" = Not Supported.

At step 63, the synchronization-service request is determined to have been accepted by the MAC layer 37. In this case, the MLME 31 issues the MLME-HL-SYNC.confirm primitive to the SME indicating that the synchronization service is supported, with the parameter setting, "ResultCode" = Success.

### A. The general form of the MLME-HL-SYNC.confirm primitive

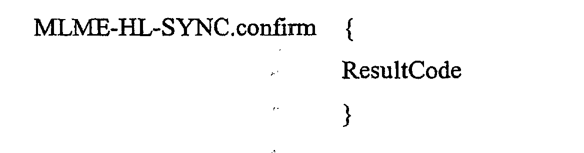

### B. Parameter Description

**Table II.**

| **Parameter Name** | **Parameter Type** | **Valid Parameter Range** | **Parameter Description** |
|---|---|---|---|
| ResultCode | Enumeration | Success * Not Supported | Indicates the result of the MLME-HL-SYNC request |

At step 65, a third primitive reports the complete transmission/reception of a synchronization frame. Specifically, an MLME-HL-SYNC.indication primitive is generated by the MLME 31 and sent to the SME 35 as a result of the PLME 33 informing the MLME 31 that it has received/transmitted a frame.

This third primitive involves two cases: reception and transmission of synchronization frames. Reception of synchronization frames takes place at the non-master nodes -- i.e., node 18a, which receive synchronization frames from the master node -- i.e., node 16a. Transmission of synchronization frames takes place at the master node 16a.

In the case of a synchronization frame being received at a non-master node 18a, the MAC layer 37 will look at the destination address of the synchronization frame being received and compare it to its own "RxAddress" previously specified by the MLME-HL-SYNC.request primitive. In the case of a match, the MLME 31 will indicate to the SME 35, via the MLME-HL-SYNC.indication primitive, that it has received a synchronization frame. The MLME-HL-SYNC.indication is issued when the last symbol on air of the received synchronization frame is detected and announced by the PHY layer.

In the case of a synchronization frame being transmitted from the master node 16a, the MAC layer 37 will look at the destination address of the transmitted frame and compare it with its own "RxAddress" previously specified by the MLME-HL-SYNC.request primitive. In the case of a match, the MLME 31 will indicate to the SME 35, via the MLME-HL-SYNC.indication primitive, that it has transmitted a synchronization frame. The MLME-HL-SYNC.indication is issued when the last symbol on air of the transmitted synchronization frame is detected and announced by the PHY layer.

### A. The general form of the primitive

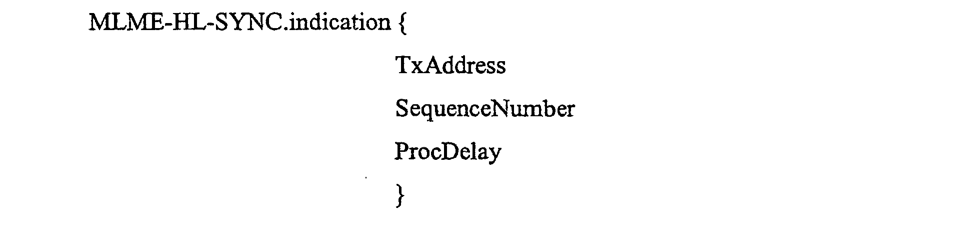

### B. Parameter Description

**Table III.**

| **Parameter Name** | **Parameter Type** | **Valid Parameter Range** | **Parameter Description** |
|---|---|---|---|
| TxAddress | MACAddress | Any valid individual MAC address | Specifies the address of the MAC entity that sent the synchronization frame. In the case of the STA sending the frame, it will be its own MAC address |
| SequenceNum ber | Enumeration | As defined in the frame format | Specifies the sequence number of the synchronization frame received/transmitted |
| ProcDelay | Enumeration | ≥ 0 | Specifies the estimated time (in usec?) between the generation of this primitive and the time at which some predetermined detection point of the frame that generated this primitive is detected on the air. |

While the preferred embodiments of the present invention have been illustrated and described, it will be understood by those skilled in the art that various changes and modifications may be made, and equivalents may be substituted for elements thereof without departing from the scope of the present invention. In addition, many modifications may be made to adapt to a particular situation and the teaching of the present invention without departing from the scope of the present invention. Therefore, it is intended that the present invention not be limited to the particular embodiment disclosed as the best mode contemplated for carrying out the present invention, but that the present invention include all embodiments falling within the scope of the appended claims.

## Claims

1. In a communication system including a plurality of non-master nodes (16b, 18a, 18b, 20a, 21) communicatively coupled to a network (10), each of said plurality of non-master nodes (16b, 18a, 18b, 20a, 21) having a local time base (18d), one of said plurality of non-master nodes (16b, 18a, 18b, 20a, 21) being designated as a master node (16a) having a master time base (16c) which serves as a master clock (16d) against which said non-master local time bases (18d) are synchronized, a method for supporting clock synchronization in a higher layer protocol of said master (16a) and non-master nodes (16b, 18a, 18b, 20a, 21), **characterized in that** the method comprises the steps of:
(a) making a synchronization request at a higher layer protocol of said master node (16a);
(b) issuing a request primitive from a station management entity (SME) (35) associated with said node to a MAC layer (37) management entity (MLME) (31) requesting a synchronization support mechanism;
(c) determining, at said MLME (31), whether to accept said synchronization support mechanism request at said step (b);
(d) issuing a confirm primitive, from said MLME (31) to said SME (35) indicating that said synchronization support mechanism is supported, where said request is accepted at said step (c).
(e) reporting one of a reception and transmission of a frame from a physical layer (PHY) associated with said node to said MLME (31); and
(f) issuing an indication primitive from said MLME (31) to said SME (35) responsive to said step (e).

2. The method of Claim 1, further comprising the steps of:
terminating the synchronization request by said MLME (31) in the case where it is determined by said MLME (31) not to accept said synchronization support mechanism at step (c); and
issuing an MLME-HL-SYNC.confirm primitive with a ResultCode parameter equal to "Not accepted."

3. The method of Claim 1, wherein said indication primitive issued from said MLME (31) to said SME (35) is issued when a last symbol on air of a received or transmitted synchronization frame is detected and announced by the PHY layer (39).

4. The method of Claim 1, wherein said request primitive transmitted from said SME (35) to said MLME (31) is an MLME-HL-SYNC request primitive having the general form: 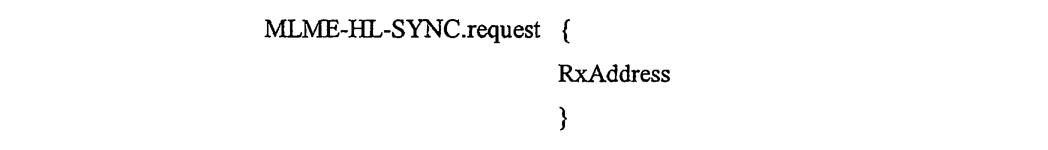 where: RxAddress is a multicast address.

5. The method of Claim 1, wherein said confirmation primitive issued from said MLME (31) to said SME (35) is an MLME-HL-SYNC request primitive having the general form: 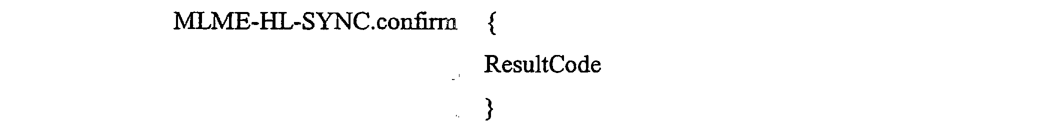 where: ResultCode = has a value of "support" or "no support".

6. The method of Claim 1, wherein the indication primitive issued from said MLME (31) to said SME (35) is an MLME-HL-SYNC indication primitive having the general form: 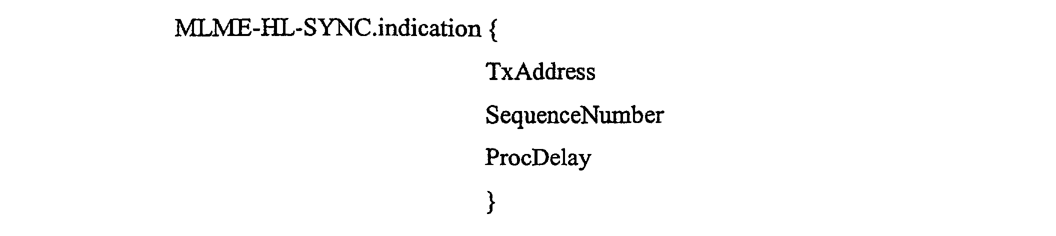 where: TxAddress - specifies the address of the MAC entity sending the
synchronization frame;
SequenceNumber - specifies the sequence number of the synchronization frame;
ProcDelay - specifies the estimated time between the generation of the primitive and the time at which some predetermined detection
point of the frame that generated this primitive was detected on the air.

7. The method of Claim 1, wherein said network is one of a wireless and wired network.

8. In a communication system including a plurality of non-master nodes (16b, 18a, 18b, 20a, 21) communicatively coupled via a network (10), each of said plurality of non-master nodes (16b, 18a, 18b, 20a, 21) having a local time base (18d), one of said plurality of non-master nodes (16b, 18a, 18b, 20a, 21) being designated as a master node (16a) having a master time base (16c) which serves as a master clock (16d) against which said non-master local time bases (18d) are synchronized, a system **characterized in that** it comprises
means for making a synchronization request at a higher layer protocol of said master node (16a);
means for issuing a request primitive from a station management entity (SME (35)) associated with said node to a MAC layer (37) management entity (MLME (31)) requesting a synchronization support mechanism;
means for determining, at said MLME (31), whether to accept said synchronization support mechanism request at said step (b);
means for issuing a confirm primitive, from said MLME (31) to said SME (35) indicating that said synchronization support mechanism is supported, where said request is accepted at said step (c);
means for reporting one of a reception or transmission of a frame from a physical layer (PHY) associated with said node to said MLME (31); and,
means for sending an indication primitive from said MLME (31) to said SME (35) responsive to said step (e).

9. The system of Claim 8, further comprising:
means for terminating the synchronization request by said MLME (31) in the case where it is determined by said MLME (31) not to accept said synchronization support mechanism at step (c); and
means for issuing an MLME-HL-SYNC.confirm primitive with a ResultCode parameter indicating non-acceptance of said synchronization support mechanism.

10. The system of Claim 8, wherein said means for sending an indication primitive further comprises means for indicating when a last symbol on air of a received or transmitted synchronization frame is detected and announced by the PHY layer (39).

11. The system of Claim 8, wherein said request primitive includes at least one parameter specifying a multicast address.

12. The system of Claim 8, wherein said indication primitive includes at least a first parameter for specifying the address of the MAC entity sending the synchronization frame, and a second parameter for specifying the sequence number of the synchronization frame and a third parameter for specifying the estimated time between the generation of the primitive and the time at which some predetermined detection point of the frame that generated the primitive is detected in the air.

13. The system of Claim 8, wherein said network is one of a wireless and wired network.

## Patentansprüche

1. In einem Kommunikationssystem mit einer Anzahl Nicht-Master Knotenpunkte (16b, 18a, 18b, 20a, 21), die kommunikativ mit einem Netzwerk (10) gekoppelt sind, wobei jeder der genannten Anzahl Nicht-Master Knotenpunkte (16b, 18a, 18b, 20a, 21) eine lokale Zeitbasis (18d) hat, wobei einer der genannten Anzahl Nicht-Master Knotenpunkte (16b, 18a, 18b, 20a, 21) als Master-Knotenpunkt (16a) bezeichnet ist mit einer Master-Zeitbasis (16c), die als Master-Takt (16d) dient, zu der die genannten Nicht-Master lokalen Zeitbasen (18d) synchronisiert werden, ein Verfahren zum Unterstützen der Taktsynchronisation in einem Protokoll einer höheren Schicht der genannten Master (16a) und Nicht-Master Knotenpunkte (16b, 18a, 18b, 20a, 21), **dadurch gekennzeichnet, dass** das Verfahren die nachfolgenden Verfahrensschritte aufweist:
(a) das Schaffen eines Synchronisationsantrags in einem Protokoll einer höheren Schicht des genannten Master Knotenpunktes (16a);
(b) das Ausgeben eines Antrags herrührend von einer Stationsverwaltungsentität (SME) (35), assoziiert mit dem genannten Knotenpunkt zu einer MAC Schicht (37) Verwaltungsentität (MLME) (31), wobei einen Synchronisationsunterstützungsmechanismus beantragt wird;
(c) das Ermitteln in der genannten MLME (31) on der Antrag des Synchronisationsunterstützungsmechanismus in dem genannten Verfahrensschritt (b) akzeptiert werden muss;
(d) das Ausgeben einer Bestätigung, herrührend von der genannten MLME (31) zu der genannten SME (35), wobei angegeben wird, dass der genannten Synchronisationsunterstützungsmechanismus unterstützt wird, wobei der genannte Antrag in dem genannten Verfahrensschritt (c) akzeptiert wird;
(e) das Berichten über einen Empfang oder eine Übertragung eines Frames von einer physikalischen Schicht (PHY), assoziiert mit dem genannten Knotenpunkt \u der genannten MLME (31); und
(f) das Ausgeben einer Angabe, herrührend von der genannten MLME (31) zu der genannten SME (35) in Reaktion auf den genannten Verfahrensschritt (e).

2. Verfahren nach Anspruch 1, wobei dieses Verfahren die nachfolgenden Verfahrensschritte umfasst:
- das Beenden des Synchronisationsantrags durch die genannte MLME (310 in dem Fall, wo durch die genannte MLME (31) bestimmt wird, den genannten Synchronisationsunterstützungsmechanismus in dem Schritt (c) nicht zu akzeptieren; und
- das Ausgeben einer MLME-HL-SYNC.confirm mit einem ResultCode-Parameter gleich "nicht akzeptiert".

3. Verfahren nach Anspruch 1, wobei die genannte Angabe, herrührend von der genannten MLME (31) zu der genannten SME (35) ausgegeben wird, wenn ein letztes Symbol eines empfangenen oder gesendeten Synchronisationsframes detektiert und von der PHY Schicht (39) angegeben wird.

4. Verfahren nach Anspruch 1, wobei der genannte Antrag von der genannten SME (35) zu der genannten MLME (31) ein MLME-HL-SYNC-Antrag ist mit der allgemeinen Form: 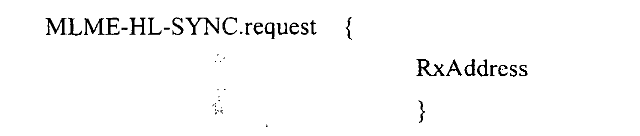 wobei : RxAddress eine Multicast-Adresse ist.

5. Verfahren nach Anspruch 1, wobei die genannte Bestätigung von der genannten MLME (31) zu der genannten SME (35) ein MLME-HL-SYNC-Antrag ist mit der allgemeinen Form: 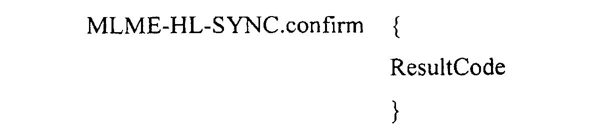 wobei : ResultCode = hat einen Wert von "support" oder "no support".

6. Verfahren nach Anspruch 1, wobei die Angabe von der genannten MLME (31) zu der genannten SME (35) eine MLME-HL-SYNC-Angabe ist mit der allgemeinen Form: 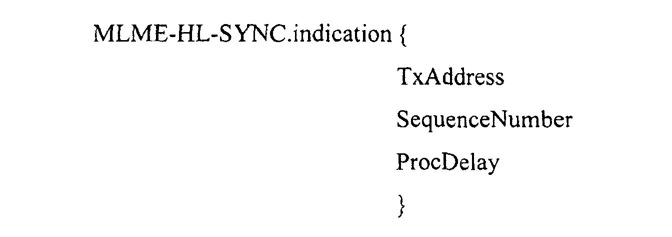 wobei: TxAddress - die Adresse der MAC-Entität spezifisiert, die das Synchronisationsframe sendet;
wobei: SequenceNumber - die Folgenummer des Synchronisationsframes spezifiziert;
wobei: ProcDelay - die geschätzte Zeit zwischen der Erzeugung der Stammfunktion und der Zeit, wo ein gewisser vorbestimmter Detektionspunkt des Frames, das diese Stammfunktion erzeugte, in der Luft detektiert wurde.

7. Verfahren nach Anspruch 1, wobei das genannte Netzwerk ein drahtloses oder ein verdrahtetes Netzwerk ist.

8. In einem Kommunikationssystem mit einer Anzahl Nicht-Master Knotenpunkte (16b, 18a, 18b, 20a, 21), die kommunikativ mit einem Netzwerk (10) gekoppelt sind, wobei jeder der genannten Anzahl Nicht-Master Knotenpunkte (16b, 18a, 18b, 20a, 21) eine lokale Zeitbasis (18d) hat, wobei einer der genannten Anzahl Nicht-Master Knotenpunkte (16b, 18a, 18b, 20a, 21) als Master-Knotenpunkt (16a) bezeichnet ist mit einer Master-Zeitbasis (16c), die als Master-Takt (16d) dient, zu der die genannten Nicht-Master lokalen Zeitbases (18d) synchronisiert werden, ein System mit dem Kennzeichen, dass es die nachfolgenden Elemente umfasst:
(a) Mittel zum Schaffen eines Synchronisationsantrags in einem Protokoll einer höheren Schicht des genannten Master Knotenpunktes (16a);
(b) Mittel zum Ausgeben eines Antrags herrührend von einer Stationsverwaltungsentität (SME) (35), assoziiert mit dem genannten Knotenpunkt zu einer MAC Schicht (37) Verwaltungsentität (MLME) (31), wobei einen Synchronisationsunterstützungsmechanismus beantragt wird;
(c) Mittel zum Ermitteln in der genannten MLME (31) on der Antrag des Synchronisationsunterstützungsmechanismus in dem genannten Verfahrensschritt (b) akzeptiert werden muss;
(d) Mittel zum Ausgeben einer Bestätigung, herrührend von der genannten MLME (31) zu der genannten SME (35), wobei angegeben wird, dass der genannten Synchronisationsunterstützungsmechanismus unterstützt wird, wobei der genannte Antrag in dem genannten Verfahrensschritt (c) akzeptiert wird;
(e) Mittel zum Berichten über einen Empfang oder eine Übertragung eines Frames von einer physikalischen Schicht (PHY), assoziiert mit dem genannten Knotenpunkt \u der genannten MLME (31); und
(f) Mittel zum Senden einer Angabe, herrührend von der genannten MLME (31) zu der genannten SME (35) in Reaktion auf den genannten Verfahrensschritt (e).

9. System nach Anspruch 8, wobei dieses System weiterhin die nachfolgenden Elemente umfasst:
- Mittel zum Beenden des Synchronisationsantrags durch die genannte MLME (31) in dem Fall, wo durch die genannte MLME (31) bestimmt wird, den genannten Synchronisationsunterstützungsmechanismus in dem Schritt (c) nicht zu akzeptieren; und
- Mittel zum Ausgeben einer MLME-HL-SYNC.confirm mit einem ResultCode-Parameter, der angibt, dass der genannte Synchronisationsunterstützungsmechanismus nicht akzeptiert wird.

10. System nach Anspruch 8, wobei die genannten Mittel zum Senden einer Angabe weiterhin Mittel aufweisen um anzugeben, wenn ein letztes Symbol in der Luft eines empfangenen oder übertragenen Synchronisationsframes detektiert und von der PHY Schicht (39) angekündigt wird.

11. System nach Anspruch 8, wobei der genannte Antrag wenigstens einen Parameter umfasst, der eine Multicast-Adresse spezifiziert.

12. System nach Anspruch 8, wobei die genannte Angabe wenigstens einen ersten Parameter aufweist zum die Adresse der MAC Entität zu spezifizieren, die das Synchronisationsframe sendet, und einen zweiten Parameter zum Spezifizieren der Folgenummer des Synchronisationsframes und eines dritten Parameters zum Spezifizieren der geschätzten Zeit zwischen der Erzeugung der Stammfunktion und der Zeit, wo ein gewisser vorbestimmter Detektionspunkt des Frames, das die Stammfunktion erzeugte, in der Luft detektiert wird.

13. System nach Anspruch 8, wobei das genannte Netzwerk ein drahtloses oder ein verdrahtetes Netzwerk ist.

## Revendications

1. Dans un système de communication comprenant une pluralité de noeuds non-maîtres (16b, 18a, 18b, 20a, 21) reliés par télécommunication à un réseau (10), chacun de ladite pluralité de noeuds non-maîtres (16b, 18a, 18b, 20a, 21) ayant une base de temps locale (18d), l'un de ladite pluralité de noeuds non-maîtres (16b, 18a, 18b, 20a, 21) étant désigné comme étant un noeud maître (16b) ayant une base de temps maîtresse (16c) qui joue le rôle d'horloge maîtresse (16d) par rapport à laquelle lesdites bases de temps locales non-maîtresses (18d) sont synchronisées, procédé de prise en charge de la synchronisation d'horloge dans un protocole de couche supérieure desdits noeuds maître (16a) et non-maîtres (16b, 18a, 18b, 20a, 21), **caractérisé en ce que** le procédé comprend les étapes suivantes :
(a) création d'une requête de synchronisation dans un protocole de couche supérieure dudit noeud maître (16a) ;
(b) envoi d'une primitive de requête par une entité de gestion de station (SME) (35) associée audit noeud à une entité de gestion de couche MAC (37) (MLME) (31) demandant un mécanisme de prise en charge de synchronisation ;
(c) détermination, dans ladite entité MLME (31), de ladite requête d'un mécanisme de prise en charge de synchronisation lors de ladite étape (b) ;
(d) envoi d'une primitive de confirmation de ladite entité MLME (31) de ladite entité SME (35), indiquant que ledit mécanisme de prise en charge de synchronisation est pris en charge, lors de quoi ladite requête est acceptée lors de ladite étape (c) ;
(e) indication de l'une de la réception et de la transmission d'une trame par une couche physique (PHY) associée audit noeud à ladite entité MLME (31) ; et
(f) envoi d'une primitive d'indication de ladite entité MLME (31) à ladite entité SME (35) en réponse à ladite étape (e).

2. Procédé selon la revendication 1, comprenant en outre les étapes suivantes :
terminaison de la requête de synchronisation par ladite entité MLME (31) dans le cas où il est déterminé par ladite entité MLME (31) qu'elle n'accepte pas ledit mécanisme de prise en charge de synchronisation à l'étape (c) ; et
envoi d'une primitive MLME-HL-SYNC.confirm avec un paramètre ResultCode égal à "non accepté".

3. Procédé selon la revendication 1, **caractérisé en ce que** ladite primitive d'indication envoyée de ladite entité MLME (31) à ladite entité SME (35) est envoyée lorsqu'un dernier symbole émis d'une trame de synchronisation reçue ou transmise est détecté et annoncé par la couche PHY (39).

4. Procédé selon la revendication 1, **caractérisé en ce que** ladite primitive transmise de ladite entité SME (35) à ladite entité MLME (31) est une primitive de requête MLME-HL-SYNC.request ayant la forme générale suivante : 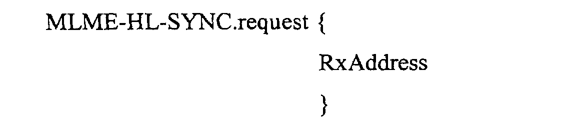 où : RxAddress est une adresse de multidiffusion.

5. Procédé selon la revendication 1, **caractérisé en ce que** ladite primitive de confirmation envoyée de ladite entité MLME (31) à ladite entité SME (35) est une primitive de requête MLME-HL-SYNC ayant la forme générale suivante : 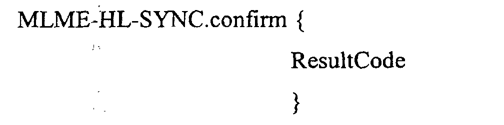 où : ResultCode a une valeur égale à "pris en charge" ou "non pris en charge".

6. Procédé selon la revendication 1, **caractérisé en ce que** la primitive d'indication envoyée de ladite entité MLME (31) à ladite entité SME (35) est une primitive d'indication MLME-HL-SYNC ayant la forme générale suivante : 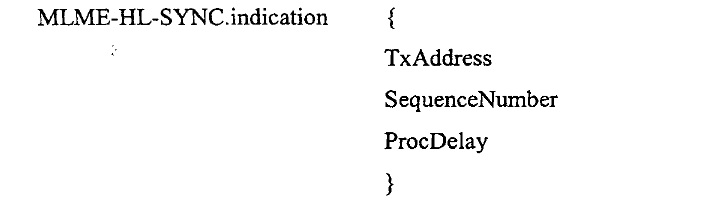 où TxAddress : spécifie l'adresse de l'entité MAC en voyant la trame de synchronisation ;
SequenceNumber : spécifie le numéro de séquence de la trame de synchronisation ;
ProcDelay : spécifie le temps estimé entre la production de la primitive et l'instant où un certain point de détection prédéteminé de la trame ayant généré cette primitive a été détecté sur l'émission.

7. Procédé selon la revendication 1, **caractérisé en ce que** le réseau est l'un d'un réseau sans fil et d'un réseau câblé.

8. Dans un système de communication comprenant une pluralité de noeuds non-maîtres (16b, 18a, 18b, 20a, 21) relié par télécommunication via un réseau (10), chacun de ladite pluralité de noeuds non-maîtres (16b, 18a, 18b, 20a, 21) ayant une base de temps locale (18d), l'un de ladite pluralité de noeuds non-maîtres (16b, 18a, 18b, 20a, 21) étant désigné comme étant un noeud maître (16a) ayant une base de temps maîtresse (16c) qui est utilisée comme horloge maîtresse (16d) par rapport à laquelle sont synchronisées lesdites bases de temps locales non-maîtresses (18d), système **caractérisé en ce qu'**il comprend :
un moyen pour créer une requête de synchronisation d'un protocole de couche supérieure dudit noeud maître (16a) ;
un moyen pour envoyer une primitive de requête de l'entité de gestion de station (SME) (35) associée audit noeud à une entité de gestion de couche MAC (37) (MLME) (31) demandant un mécanisme de prise en charge de synchronisation ;
un moyen pour déterminer dans ladite entité MLME (31) si celle-ci accepte ladite requête de mécanisme de prise en charge de synchronisation lors de ladite étape (b) ;
un moyen pour envoyer une primitive de confirmation de ladite entité MLME (31) à ladite entité SME (35) indiquant que ledit mécanisme de prise en charge de synchronisation est pris en charge, lorsque ladite requête est acceptée lors de ladite étape (c) ;
un moyen pour indiquer l'une de la réception ou de la émission d'une trame par une couche physique (PHY) associée audit noeud à destination de ladite entité MLME (31) ; et
un moyen pour envoyer une primitive d'indication de ladite entité MLME (31) à ladite entité SME (35) en réponse à ladite étape (e).

9. Système selon la revendication 8, comprenant en outre :
un moyen pour terminer la requête de synchronisation envoyée par ladite entité MLME (31) dans le cas où il est déterminé par ladite entité MLME (31) qu'elle n'accepte pas ledit mécanisme de prise en charge de synchronisation lors de l'étape (c) ; et
un moyen pour envoyer une primitive MLME-HL-SYNC.confirm avec un paramètre ResultCode indiquant une non-acceptation dudit mécanisme de prise en charge de la synchronisation.

10. Système selon la revendication 8, **caractérisé en ce que** ledit moyen d'envoi d'une primitive d'indication comprend en outre un moyen pour indiquer l'instant où un dernier symbole d'émission d'une trame de synchronisation reçue ou transmise est détecté et annoncé par la couche PHY (39).

11. Système selon la revendication 8, **caractérisé en ce que** ladite primitive de requête contient au moins un paramètre spécifiant une adresse de multidiffusion.

12. Système selon la revendication 8, **caractérisé en ce que** ladite primitive d'indication contient au moins un premier paramètre pour spécifier l'adresse de l'entité MAC envoyant la trame de synchronisation, et un second paramètre pour spécifier le numéro de séquence de la trame de synchronisation et un troisième paramètre pour spécifier le temps estimé entre la production de la primitive et l'instant où un certain point de détection prédéterminé de la trame ayant généré la primitive est détecté dans l'émission.

13. Système selon la revendication 8, **caractérisé en ce que** ledit réseau est l'un d'un réseau sans fil et d'un réseau câblé.
